# EUROPÄISCHE PATENTSCHRIFT

(11) **EP 2 004 473 B1**
(45) Veröffentlichungstag und Bekanntmachung des Hinweises auf die Patenterteilung: **14.08.2013**
(21) Anmeldenummer: 07701910.7
(22) Anmeldetag: 02.03.2007
(51) Int. Cl.: B62D 5/04, G06F 11/00, B60T 8/88, B62D 5/00, B60W 10/20, B60W 50/02

(54) **ÜBERWACHUNGSEINRICHTUNG FÜR DIE FUNKTION EINER ELEKTRONISCHEN STEUERUNGSEINRICHTUNG UND VERFAHREN HIERZU**
MONITORING DEVICE FOR THE FUNCTION OF AN ELECTRONIC CONTROL DEVICE, AND METHOD FOR THIS PURPOSE
DISPOSITIF DE SURVEILLANCE DU FONCTIONNEMENT D'UN DISPOSITIF ÉLECTRONIQUE DE COMMANDE ET PROCÉDÉ ASSOCIÉ

(30) Priorität: 03.04.2006 CH 5492006
(43) Veröffentlichungstag der Anmeldung: 24.12.2008
(73) Patentinhaber: ThyssenKrupp Presta Aktiengesellschaft, 9492 Eschen (LI)
(72) Erfinder: THIMAR, Zoltan, H-1082 Budapest (HU)
(74) Vertreter: Troesch Scheidegger Werner AG
(86) Internationale Anmeldenummer: PCT/CH2007/000110
(87) Internationale Veröffentlichungsnummer: WO 2007/112603

(56) Entgegenhaltungen:
- EP-A- 1 205 373
- EP-A- 1 574 419
- US-B1- 6 410 993

## Beschreibung

Die Erfindung bezieht sich auf ein Verfahren zur Überwachung eines Steuerungsprogrammes eines Steuerungssystems mit einer Steuereinrichtung mit einem Prozessor und einem Steuerprogramm nach dem Oberbegriff von Anspruch 1.

Die Erfindung bezieht sich auf ein Verfahren zur Fehlerüberwachung der Steuereinrichtung wobei insbesondere der richtige Ablauf des im Steuereinrichtung implementierten Steuerverfahrens überwacht wird. Als Ergebnis der Überwachung wird ein Ausgabesignal generiert, mit dessen Hilfe eine Fehlerbehandlungsmassnahme, beispielsweise durch eine Zusatzsteuerung eingeleitet werden kann. Im besonderem Masse zielt die Erfindung auf die Überwachung von Abläufen in Digitalrechnern bzw. Prozessoren bzw. Mikroprozessoren. Es ist dabei unerheblich, ob die Störung im Ablauf auf einen Fehler in der Software, der Hardware oder eine Fehlfunktion aufgrund fehlender oder falscher Eingangssignale oder aufgrund eines Ausfalls der Stromversorgung der Steuerung zurückzuführen ist.

Im Stand der Technik (DE3728561C2) wird eine vergleichbare Aufgabe gelöst, indem ein in einem Mikroprozessor abgelegtes Programm derart ausgelegt ist, dass in regelmässigen Abständen ein Signal abgegeben wird, das einen Zähler zurücksetzt. Wird eines der ansonsten regelmässig abgegebenen Signale später als zu einer vorher definierten Zeit abgegeben, so wird durch eine externe Schaltung, die mittels eines Zählers die Zeitdauer misst, ein Fehlersignal generiert.

Bei einer derartigen Anordnung kann jedoch nicht festgestellt werden, ob das in dem Mikroprozessor abgelegte Programm in der richtigen Reihenfolge abgearbeitet wird. So könnten Programmschleifen, die einen entsprechenden Kontrollpunkt für eine Signalausgabe beinhalten, unendlich oft oder die Programmschritte mit den zugehörigen Kontrollpunkten in völlig falscher Reihenfolge durchlaufen werden, ohne dass die Überwachungseinheit 12 das merkt und daraus ein Fehlersignal generieren kann.

Eine weitere bekannte Anordnung zur Fehlerüberwachung in einem Steuerungseinrichtung wird in der EP 1 205 373 A1 beschrieben. Hierbei weist ein Steuerungssystem für ein Stellglied in einem Kraftfahrzeug, insbesondere für ein Lenk-Steuerungssystem, eine Regel- und Steuereinheit auf, welche in Abhängigkeit von Messdaten eines Sensors Stellsignale zur Einstellung des Stellgliedes erzeugt. Weiterhin ist eine Kontrolleinheit zur Überwachung der Funktion der Regel- und Steuereinheit vorgesehen, wobei im Fehlerfall das Steuerungssystem abgeschaltet wird. Die Regel- und Steuereinheit besteht aus drei funktional eigenständig arbeitenden Funktionseinheiten, wobei die zweite Funktionseinheit die Stellsignale der ersten Funktionseinheit auf Übereinstimmung mit Sollwerten untersucht und im Fehlerfall das Steuerungssystem abschaltet. Drei funktional eigenständig arbeitenden Funktionseinheiten verarbeiten die Signale nebeneinander und werden in Vergleichsprozessen bearbeitet.

Eine wichtige Anwendung, wo besonders hohe Betriebssicherheit gefordert wird, ist der Einsatz von Steuerungsystemen zur Steuerung von Aggregaten in Motorkraftfahrzeugen. Hierbei spielt beispielsweise die Lenkvorrichtung eine besonders wichtige Rolle.

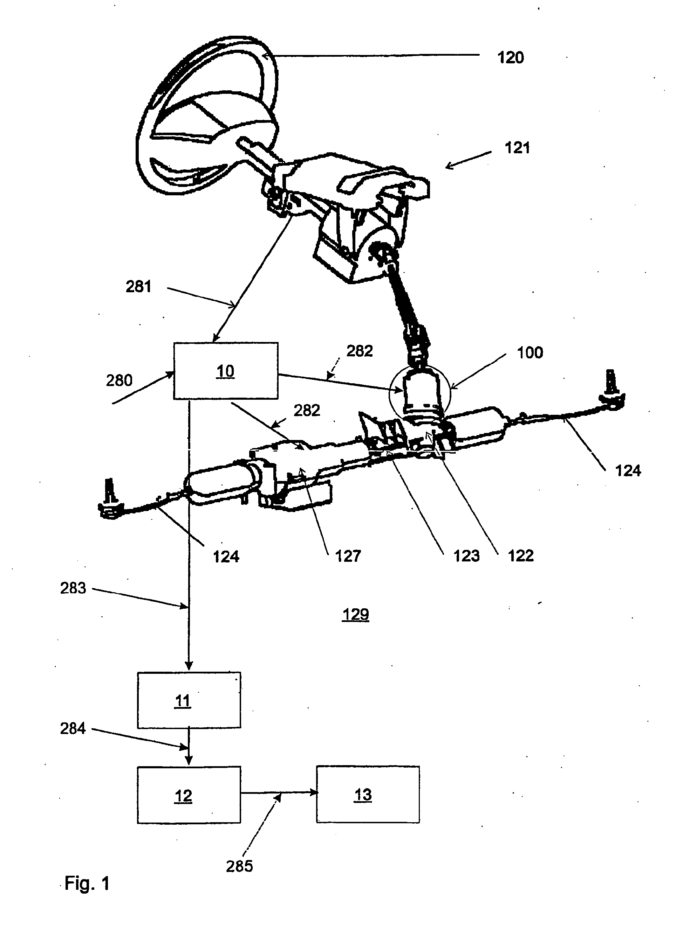

In Fig. 1 ist ein schematischer Aufbau einer Lenkvorrichtung 129 mit Hilfskraftunterstützung dargestellt, welcher im wesentlichen dem Stand der Technik entspricht. Sie besteht unter anderem aus einem Steuerrad 120, einer Lenksäule 121, dem Lenkgetriebe 122 und den beiden Spurstangen 124. Die Spurstangen 124 werden durch die Zahnstange 123 angetrieben. Zur Hilfskraftunterstützung dient die aus hier nicht näher zu bezeichnenden Komponenten gebildete Lenkkraftunterstützung 127. Weiter besitzt die Lenkvorrichtung 129 eine Überlagerungseinrichtung 100 zur Drehzahlüberlagerung. Beide Einrichtungen werden durch einen, bevorzugt elektrisch angetriebenen, Servomotor angetrieben. Dabei wird der Fahrerwunsch durch das Steuerrad 120 über eine nicht gezeigte Sensorik, üblicherweise ein vom Fahrer auf das Lenkrad aufgeprägter Drehwinkel und ein aufgeprägtes Drehmoment, als Signal 281 in eine Steuereinrichtung 10 eingespeist. Bevorzugt werden einzelne oder mehrere weitere Messgrössen, wie beispielsweise nicht abschliessend: Fahrgeschwindigkeit, Gierrate, Seitewindgeschwindigkeit, Beladungszustand des Fahrzeuges, Unebenheiten der Fahrbahn, Neigung des Fahrzeuges sowie: Winkelposition der Servomotore, gemessene Strom- und Spannungswerte an der Stromversorgung der Servomotore gemessen und als Signal in die Steuereinrichtung 10 eingespeist. Weiterhin werden je nach Ausführung auch Signale 280 aus dem hier nicht dargestellten Fahrzeugsteuersystem in die Steuereinrichtung 10 eingespeist. In der Steuereinrichtung 10 wird aus den entsprechend eingespeisten Signalen die entsprechende Steuerspannung 282 für den Elektromotor der Lenkkraftunterstützung 127 und die Steuerspannung 282 des Antriebs für die Drehzahlüberlagerungseinrichtung 100 bestimmt und an die Lenkkraftunterstützung 127 bzw. Drehzahlüberlagerungseinrichtung 100 ausgegeben. Dabei ist eine feinfühlige und schnelle Regelung erforderlich, welches ein steifes und wenig Trägheit und Eigenschwingung verursachendes Lenksystem ermöglicht. Für derartige Systeme ist ein sehr hohes Mass an Ausfallsicherheit notwendig. Bereits kleinste Fehlfunktionen in der Steuereinrichtung können zu falschen Lenkausschlägen und damit zu Unfällen führen.

Die Fehlfunktionen können dabei auf verschiedene Ursachen zurückzuführen sein. Zunächst kann einfach ein Ausfall der Bordspannung, beispielsweise bedingt durch Leitungs- oder Kontaktbrüche, zu einem abrupten Unterbruch der Steuerfunktion führen. In diesem Fall muss das Überlagerungsgetriebe der Drehzahlüberlagerungseinrichtung 100 mittels einer Zwangskupplung überbrückt werden und die Lenkeingriffe vom Steuerrad 120 direkt auf die Verschwenkung der Räder übertragen werden. Weiter kann ein Sensorfehler oder Sensorausfall zu fehlerhaften Rechenergebnissen in der Steuereinrichtung und damit fehlerhaften Steuersignalen für einen oder beide Servomotoren führen. Auch derartige Fälle lassen sich durch relativ einfache Sensorüberwachungseinrichtungen abfangen, so dass in der Steuereinrichtung ein entsprechendes Notprogramm angestossen werden kann. Dabei können die Notmassnahmen auch einfach nur in der Ausgabe eines akustischen oder optischen Signals zur Warnung an den Fahrer bestehen.

Ein besonders schwer zu lösendes Problem besteht jedoch darin, Fehlabläufe im Steuerverfahren der Steuereinrichtung 10 schnell zu erkennen, damit entsprechende Fehlerbehandlungsmassnahmen, wie beispielsweise die bereits oben erwähnte zwangsweise Überbrückung der Drehzahlüberlagerungseinrichtung 100, eingeleitet wird. Fehlabläufe im System können sowohl Software, wie Hardware bedingt sein. Ein wichtiges Problem stellt auch das Temperaturproblem dar welches zu Funktionsstörungen in Bauteilen führen kann, wie beispielsweise in den elektronischen Prozessorschaltungen der Steuerung selbst.

Aufgabe der Erfindung ist es, und ein Verfahren zur Fehlerüberwachung der Steuereinrichtung bereitzustellen, wobei insbesondere der richtige Ablauf des im Steuereinrichtung implementierten Steuerverfahrens, insbesondere eines in der Steuereinrichtung abgelegten Programms auf Fehlfunktion überwacht wird.

Die Aufgabe wird erfindungsgemäss durch das Verfahren nach Anspruch 1 gelöst, sowie nach dem Ver. Die abhängigen Ansprüche definieren weitere vorteilhafte Ausführungsformen.

Das Steuerungssystem beinhaltet eine Steuereinrichtung mit einem Prozessor und einem Steuerprogramm, welches aus mindestens einem in die Steuereinrichtung eingespeisten Messwertsignal mindestens ein Stellwertsignal berechnet welches mit einem Stellaktuator wirkverbunden ist, wobei an mindestens zwei vordefinierten Ablaufpunkten im Steuerprogramm mindestens ein Kontrollpunkt (K) definiert ist , an dem die Steuereinrichtung einen Programmausgabewert ausgibt, welcher ein Überwachungssignal bildet und an eine Überwachungseinrichtung ausgibt. Das Überwachungssignal enthält mindestens zwei Signalelemente von drei möglichen Signalelementen, wobei ein erstes Signalelement den Kontrollpunkt, den das Steuerprogramm unmittelbar vor dem derzeitigen Kontrollpunkt durchlaufen haben soll repräsentiert und ein zweites Signalelement, das den derzeitigen Kontrollpunkt repräsentiert und ein drittes Signalelement, das den nächsten im Programmablauf vorgesehenen Kontrollpunkt repräsentiert, wobei die Überwachungseinrichtung die Überwachungssignale auf korrekten Zustand prüft und dass ein Zustandssignal als Fehlersignal ausgebbar ist.

Gelöst wird die Aufgabe insbesondere durch eine Steuereinrichtung mit einem darin abgelegten Steuerprogramm, das aus mindestens einem in der Steuereinrichtung eingespeisten Messwertsignal mindestens ein Stellwertsignal berechnet und an einen Stellaktuator ausgibt, wobei an mindestens zwei vordefinierten Ablaufpunkten im Steuerprogramm Kontrollpunkte definiert sind, an denen die Steuerung ein Signal an eine Überwachungseinrichtung ausgibt und dass das Signal mindestens zwei Signalelementen von drei möglichen Signalelementen enthält, wobei ein erstes Signalelement den Kontrollpunkt, den das Steuerprogramm unmittelbar vor dem derzeitigen Kontrollpunkt durchlaufen haben soll repräsentiert, ein zweites Signalelement das den derzeitigen Kontrollpunkt und ein drittes Signalelement repräsentiert, das den nächsten im Programmablauf vorgesehenen Kontrollpunkt repräsentiert, enthält, wobei die Überwachungseinrichtung ein digitales oder analoges Signal als Fehlermitteilung ausgibt. Dabei hat das Signal für die Fehlermitteilung zwei voneinander unterscheidbare Pegel oder Werte, einen für den Zustand "Fehler" und einen für den Zustand "kein Fehler". Die vorgeschlagene Lösung ist für alle Steuerprogramme anwendbar und benötigt nur 2 Speichereinheiten, 2 Komparatoreinheiten, 1 Oder-Glied, sowie den Arbeitsspeicher für die Ausführung der Operationen in den Komparatoren und im Oder-Glied.

Die Erfindung wird nun beispielsweise mit schematischen Figuren beschrieben. Es zeigen:
- Fig.1: Schematischer Aufbau einer Lenkvorrichtung 129 mit Hilfskraftunterstützung,
- Fig.2: Schematische Darstellung der Hardwarearchitektur und Signalverläufe im Falle eines sich nicht verzweigenden Programmabschnitts,
- Fig.3: Schematische Darstellung der Hardwarearchitektur und Signalverläufe im Falle eines sich nicht verzweigenden Programmabschnitts entsprechend Figur 2 für den Fall, dass der Programmzeiger 20 den Kontrollpunkt K1 erreicht hat,
- Fig.4: Schematische Darstellung der Hardwarearchitektur und Signalverläufe im Falle eines sich nicht verzweigenden Programmabschnitts entsprechend Figur 2 für den Fall, dass der Programmzeiger 20 den Kontrollpunkt K2 erreicht hat,
- Fig.5: Schematische Darstellung der Hardwarearchitektur und Signalverläufe im Falle eines sich nicht verzweigenden Programmabschnitts entsprechend Figur 2 für den Fall, dass der Programmzeiger 20 den Kontrollpunkt K2 nicht durchläuft,
- Fig.6: Schematische Darstellung der Hardwarearchitektur und Signalverläufe im Falle eines sich verzweigenden Programmabschnitts,
- Fig.7: Schematische Darstellung der Hardwarearchitektur und Signalverläufe im Falle eines sich verzweigenden Programmabschnitts entsprechend der Figur 6 für den Fall, dass der Programmzeiger 20 den Kontrollpunkt K1 erreicht hat,
- Fig.8: Schematische Darstellung der Hardwarearchitektur und Signalverläufe im Falle eines sich verzweigenden Programmabschnitts entsprechend der Figur 6 für den Fall, dass der Programmzeiger 20 den Kontrollpunkt K2 erreicht hat,
- Fig.9: Schematische Darstellung der Hardwarearchitektur und Signalverläufe im Falle eines sich verzweigenden Programmabschnitts entsprechend der Figur 6 für den Fall, dass der Programmzeiger 10 den Kontrollpunkt K5 fehlerbedingt, unter Umgehung eines der Kontrollpunkte K2, K3 oder K4, erreicht hat,
- Fig. 10, 11, 12:: Aufbau drei verschiedener Varianten des Überwachungssignals 284, das in die Überwachungseinrichtung 12 eingespeist wird.

In Figur 1 ist eine bevorzugte Anwendung einer Lenkvorrichtung 129 mit Hilfskraftunterstützung für Kraftfahrzeuge schematisch dargestellt. Sie besteht unter anderem aus einem Steuerrad 120, einer Lenksäule 121, dem Lenkgetriebe 122 und den beiden Spurstangen 124. Die Spurstangen 124 werden durch die Zahnstange 123 angetrieben. Zur Hilfskraftunterstützung dient die aus hier nicht näher zu bezeichnenden Komponenten gebildete Lenkkraftunterstützung 127. Weiter besitzt die Lenkvorrichtung 129 eine Überlagerungseinrichtung 100 zur Drehzahlüberlagerung. Beide Einrichtungen werden durch einen, bevorzugt elektrisch angetriebenen, Servomotor angetrieben. Dabei wird der Fahrerwunsch durch das Steuerrad 120 über eine nicht gezeigte Sensorik, üblicherweise vom Fahrer auf das Lenkrad aufgeprägter Drehwinkel und Drehmoment, als Signal 281 in eine Steuereinrichtung 10 eingespeist. Bevorzugt werden einzelne oder mehrere weitere Messgrössen, wie beispielsweise nicht abschliessend: Fahrgeschwindigkeit, Gierrate, Seitewindgeschwindigkeit, Beladungszustand des Fahrzeuges, Unebenheiten der Fahrbahn, Neigung des Fahrzeuges sowie: Winkelposition der Servomotore, gemessene Strom- und Spannungswerte an der Stromversorgung der Servomotore gemessen und als Signal in die Steuereinrichtung 10 eingespeist. Weiterhin werden je nach. Ausführung auch Signale 280 aus dem hier nicht dargestellten Fahrzeugsteuersystem in die Steuereinrichtung 10 eingespeist. In der Steuereinrichtung 10 werden aus den entsprechend eingespeisten Signalen die entsprechende Steuerspannung 282 für den Elektromotor der Lenkkraftunterstützung 127 und die Steuerspannung 282 des Antriebs für die Drehzahlüberlagerungseinrichtung 100 bestimmt und an die Lenkkraftunterstützung 127 bzw. Drehzahlüberlagerungseinrichtung 100 ausgegeben.
Um Fehlfunktionen im System und insbesondere im Steuerungsablauf zuverlässig erkennen zu können werden Programmausgabewerte 283 an eine Verarbeitungseinrichtung 11 abgegeben, die eine Signalausgabeeinheit 14 enthält welche ein Überwachungssignal 284 an eine Überwachungseinrichtung 12 weitergibt, wobei nach bestimmten Kriterien der Programmablauf geprüft wird, um im Fehlerfall eine Fehlermitteilung 285 oder ein Fehlersignal ausgeben zu können. Mit einer weiteren Steuerung kann das Fehlersignal aufbereitet werden und bestimmte Anzeigen und/oder Sicherheitsmassnahmen auslösen.

Das Steuerungssystem zur Fehlererkennung enthält eine Steuereinrichtung 10 mit einem Prozessor und einem Steuerprogramm, welches aus mindestens einem in die Steuereinrichtung 10 eingespeisten Messwertsignal 281 mindestens ein Stellwertsignal 282 berechnet welches mit einem Stellaktuator 100, 127 wirkverbunden ist, wobei an mindestens zwei vordefinierten Ablaufpunkten im Steuerprogramm mindestens ein Kontrollpunkt (K) definiert ist , an dem die Steuereinrichtung 10 einen Programmausgabewert 283, 284 ausgibt, welcher ein Überwachungssignal 284 bildet und an eine Überwachungseinrichtung 12 ausgibt, wobei das Überwachungssignal 284 mindestens zwei Signalelemente 284a, b , c von drei möglichen Signalelementen enthält, wobei ein erstes Signalelement 284a den Kontrollpunkt (K1), den das Steuerprogramm unmittelbar vor dem derzeitigen Kontrollpunkt (K2) durchlaufen haben soll repräsentiert und ein zweites Signalelement 284b, das den derzeitigen Kontrollpunkt repräsentiert und ein drittes Signalelement 284c, das den nächsten im Programmablauf vorgesehenen Kontrollpunkt (K3) repräsentiert, wobei die Überwachungseinrichtung 12 die Überwachungssignale 284 auf korrekten Zustand prüft und dass ein Zustandssignal als Fehlersignal 285 ausgebbar ist.

An sich können auch mehr als drei Signalelemente 284 verwendet werden, welche sich dann entsprechend auf weiter zurückliegende und weitere nächste Kontrollpunkte zum Vergleich beziehen könnten. Dies würde dann aber einen wesentlich höheren Aufwand in der Realisierung bei nur relativ geringer Erhöhung der Sicherheit bedingen.

Üblicherweise werden in der Realisierung mehrere hundert oder gar bis zu mehreren tausend Kontrollpunkte im Programmablauf gesetzt.

In einer Weiterbildung der Erfindung wird die Fehlermitteilung 285 an eine weitere Steuerung 13 ausgegeben, die entsprechende Notmassnahmen einleitet, beispielsweise die Ein- und Ausgangswelle eines Überlagerungsgetriebes einer Drehzahlüberlagerungseinrichtung 100 für eine Lenkeinrichtung 129 mittels einer Kupplung zwangskoppelt und damit die Drehzahlüberlagerungseinrichtung 100 überbrückt.

In einer Weiterbildung der Erfindung wird zusätzlich geprüft, ob zwischen der Aussendung zweier aufeinanderfolgender Überwachungssignale 284, die von der Steuereinrichtung 10 ausgelöst durch die Verarbeitungseinrichtung 11 an die Überwachungseinrichtung 12 ausgesendet wurden, eine vorgegebene Zeit nicht überschritten wurde.

In einer weiteren Weiterbildung der Erfindung wird zusätzlich geprüft, ob bestimmte Kontrollpunkte innerhalb einer vorgegebenen Zeit erreicht werden, also eine Zeitüberwachung mit einem Timer erfolgt.

Als Beispiel wird eine Steuereinrichtung gewählt, die einen Digitalrechner bzw. einen Prozessor enthält, in dem ein Steuerprogramm abgelegt ist. Ober entsprechende Analog-Digital-Wandler oder Digital-Digital-Wandler, die in den Figuren nicht dargestellt sind, werden Messsignale 281 und Signale 280 aus dem nicht dargestellten Fahrzeugsteuergerät in die Steuereinrichtung 10 eingeleitet. Die Steuereinrichtung 10 sendet über weitere Digital-Analog-Wandler oder Digital-Digital-Wandler, die in den Figuren nicht dargestellt sind Stellsignale 282 an die von der Steuereinrichtung zu steuernden Einrichtungen, hier im Beispiel einen Elektromotor einer Elektrischen Servolenkungsunterstützung 127 und an den Elektromotor einer elektrisch unterstützten Drehzahlüberlagerungseinrichtung 100.

Die Signalverarbeitung mit der Verarbeitungseinrichtung 11, der Überwachungseinheit 12 und allenfalls der weiteren Steuerung 13 für die Aufbereitung der Anzeige und/oder Notmassnahmen können insgesamt oder auch teilweise in Form von programmierter Hardware ausgebildet werden, also in einem weiteren Computerprogramm enthalten sein. Es ist aber von Vorteil wenn diese Einheiten 11, 12, 13 möglichst in Hardware, als elektronische Schaltungsanordnung, ausgebildet wird, um die gesamte Zuverlässigkeit zu erhöhen.

Das vorerwähnte erfinderische Steuerungskonzept kann auch in Maschinensteuerungen eingesetzt werden, wo hohe Zuverlässigkeit gefordert ist. Weiter bevorzugt ist auch der Einsatz für die Steuerung von Aggregaten in Verbrennungskraftmaschinen oder Kraftfahrzeugen, wie beispielsweise für Motorsteuerungen, variable Hubsteuerungen der Gassteuerventile, Ansteuerung von Nockenwellenverstellern und anderen Aktuatoren für variable Hubsysteme von Verbrennungskraftmaschinen. Besonders bevorzugt wird es eingesetzt bei Lenksystemen, da dort besonders hohe Betriebssicherheiten verlangt werden.

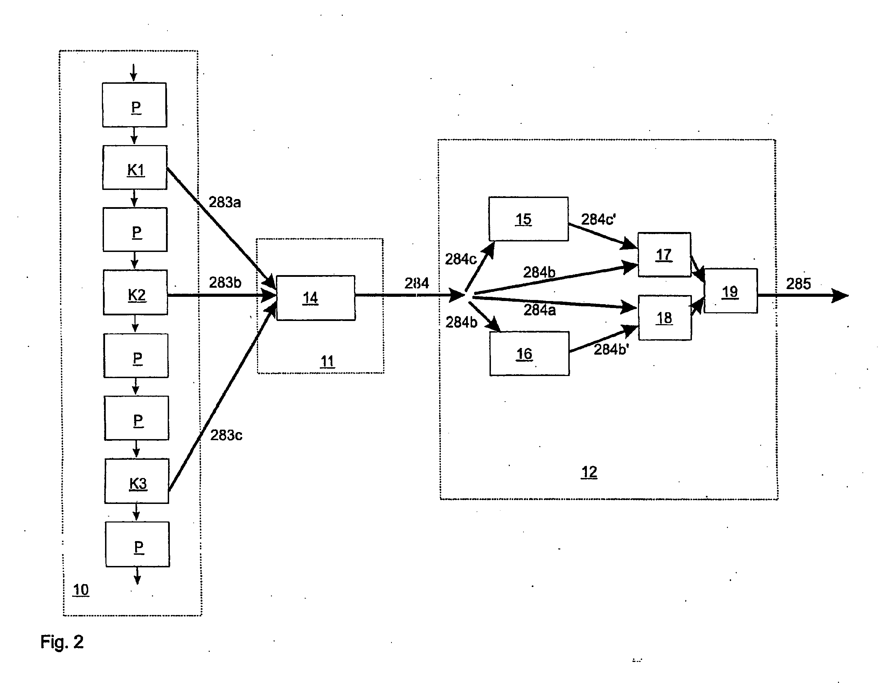

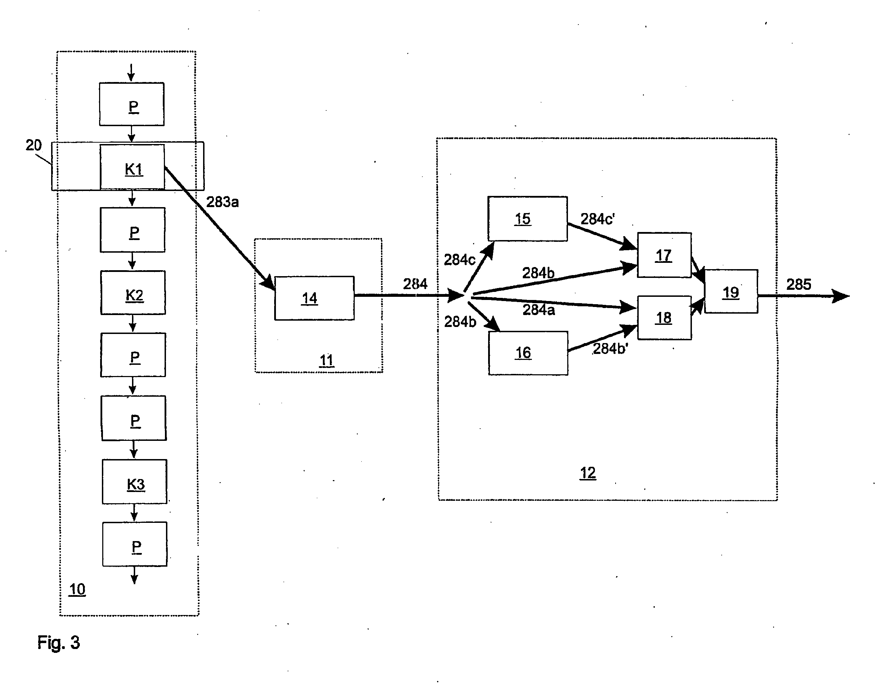

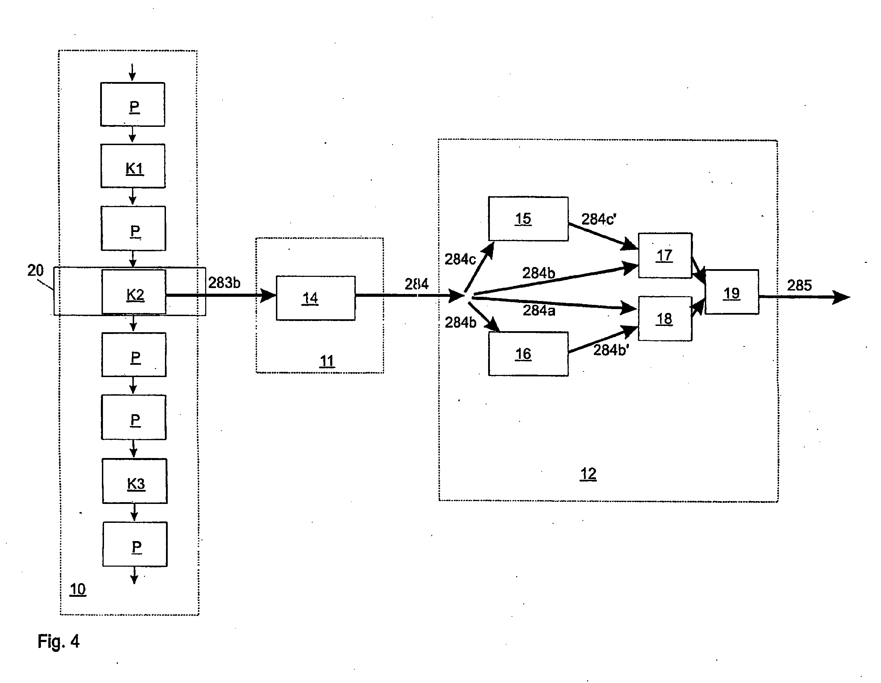

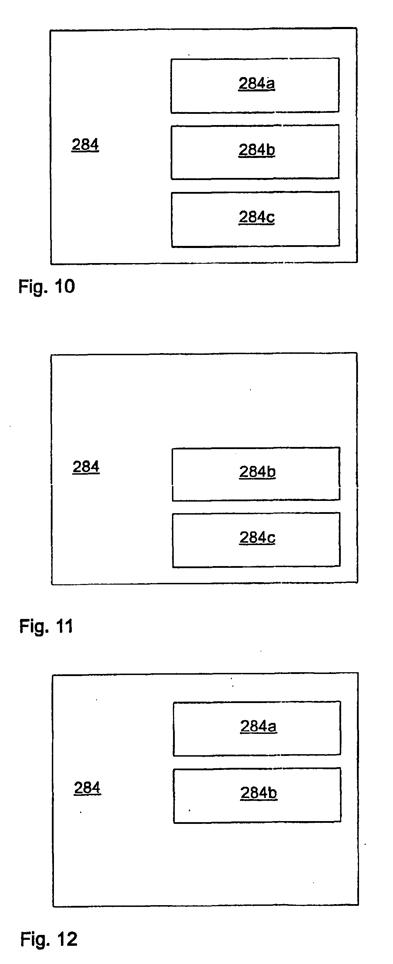

Entsprechend den Figuren 2, 3, 4 ist in der Steuereinrichtung 10 ein Programm abgelegt, dass eine Vielzahl von Programmschritten P, K1, K2, K3 enthält, die, angestossen durch einen in der Steuerungstechnik bekannten Taktgeber, der Reihe nach durchlaufen werden. Es sei angemerkt, dass ein Programmschritt P auch der Repräsentant für eine Vielzahl von Programmschritten sein kann. In den Figuren ist der Programmablauf durch einen Pfeil gekennzeichnet. In den Figuren 3 und 4 ist ein momentaner Zustand des Programmablaufes, heisst: welcher Programmschritt gerade ausgeführt wird, durch einen Programmzeiger 20 angedeutet. In die Reihe der Programmschritte sind besondere Programmschritte, die Kontrollpunkte K1, K2, K3 integriert, die entsprechend der Programmabfolge durchlaufen werden. Kommt der Programmzeiger 20 an einem der besonderen Programmschritten, einem Kontrollpunkt K1, K2, K3 an, so wird aus einem Programmausgabewert 283, 283a, 283b, 283c ein digitales Signal 284 in der Verarbeitungseinrichtung 11 generiert, das drei Signalelemente 284a, 284b und 284c enthält, wie es in den Figuren 10,11,12 schematisch dargestellt ist. Jedem Kontrollpunkt ist das Wertetripel für die Signalelemente: Sollwert für den vorangegangenen Kontrollpunkt 283a, Istwert des aktuellen Kontrollpunkts 283b und Sollwert für den nachfolgenden Kontrollpunkt 283c zugeordnet.

Jeweils, wenn ein Signal 284 in der Überwachungseinrichtung eintrifft, so wird der Inhalt 284c' eines ersten Speichers 15 ausgelesen und einem ersten Komparator 17 zugeführt. Ebenso wird das Signalelement - aktueller Istwert des Kontrollpunktes 284b dem ersten Komparator 17 zugeführt. Gleichzeitig wird der Inhalt 284b' eines zweiten Speichers 16 ausgelesen einem zweiten Komparator 18 zugeführt. Ebenso wird das Signalelement - Sollwert vorangegangener Kontrollpunkt 284a dem zweiten Komparator 18 zugeführt.

Weiter werden in der Überwachungseinrichtung 12 das Signalelement - Sollwert für den nächsten Kontrollwert 283c in den ersten Speicher 15 eingespeichert und das Signalelement - Istwert des aktuellen Kontrollpunkts 283b in den zweiten Speicher 16 eingespeichert.

In den beiden Komparatoren 17 und 18 werden entsprechende Vergleichsoperationen durchgeführt, deren Ergebnis "wahr" oder "falsch" ist. Im "Oder-Glied" 19 wird das Fehlersignal 285 erzeugt, dass im Falle, dass beide Ergebnisse "falsch" sind, das Fehlersignal 285 auf dem Level oder dem Wert "Fehler" gesetzt ist. Im Falle, dass mindestens ein Ergebnis "wahr" ist, ist das Fehlersignal 285 auf dem Level oder den Wert "kein Fehler" gesetzt.

Aufgrund des folgenden Ablaufes der Einspeicherung in den ersten Speicher 15 und zweiten Speicher 16, wie er oben beschrieben wurde, werden damit im ersten Komparator 17 der Istwert des derzeit erreichten Kontrollpunktes 284b mit dem Sollwert für den jetzt anzusteuernden Kontrollpunkt, wie er im vorangegangenen Kontrollpunkt hinterlegt war 284c' verglichen. Im zweiten Komparator 18 wird hingegen der Istwert des vorangegangenen Kontrollpunktes 284b' mit dem Sollwert für den Kontrollpunkt, der als Vorgänger im aktuellen Kontrollpunkt hinterlegt ist 284a, verglichen.

Bei der Initialisierung des Programms werden entsprechende Dummy-Werte zum Vergleich für den vorangegangenen Kontrollpunkt festgelegt und in den beiden Speichern 15 und 16 abgelegt.

Für eine Veranschaulichung werden in den folgenden tabellarischen Darstellungen die Signalinhalte der Signalelemente 284a, 284b und 284c mit den jeweiligen Kontrollpunkten K1, K2 usw. gleichgesetzt. In der folgenden Tabelle 1 sind die Inhalte der Speicher und Vergleichsoperationen , wie sie in der Abfolge in den Figuren 3, 4 und 5 entstehen dargestellt.

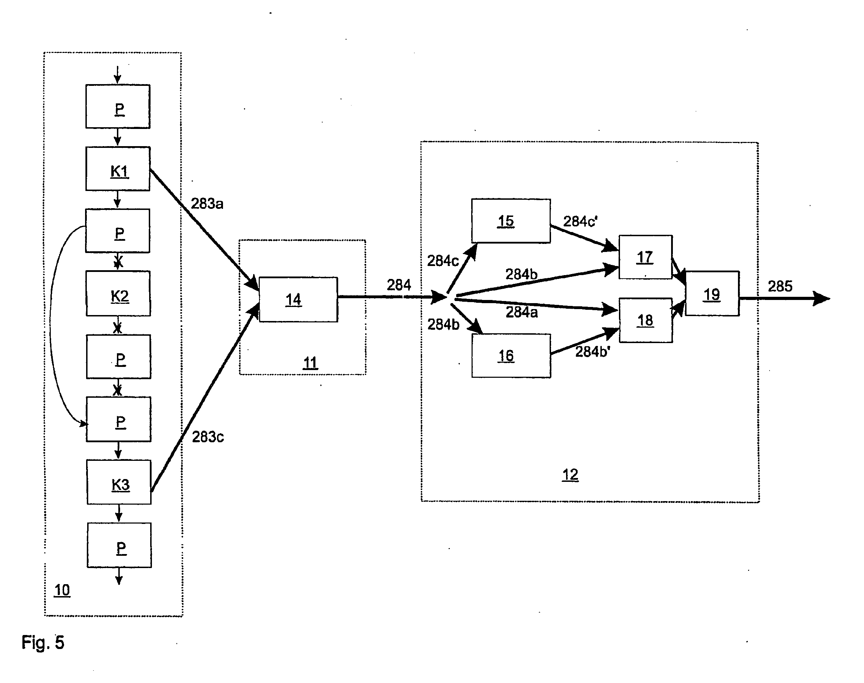

In der Figur 5 ist dargestellt, wie das Programm nicht entsprechend dem vorgesehenen Ablauf erfolgt. Der Kontrollpunkt K2 wird nicht erreicht. Die Überwachungseinrichtung 12 detektiert entsprechend bei Erreichen des Kontrollpunktes K3 einen Fehler.

In der folgenden Tabelle 2 ist die Abfolge, wie sie in einem Programmablauf entsprechend der Figur 5 entsteht, dargestellt.

**Tabelle 1**

| **Programmzeiger bei Kontrollpunkt** | **Signaltripel 284** | **Speicherinhalt vor Einspeicherung** | **Speicherinhalt nach Einspeicherung** | **Werte, die im Komparator verglichen werden** | **Ergebnis** | **Fehlermit-teilung** |
|---|---|---|---|---|---|---|
| K1 | 284a: 0 | Speicher 15: (284c') | Speicher 15: K2 | Komparator 17: (284c') (284b) | | |
| | 284b: K1 | | | | | |
| | 284c: K2 | K1 | | K1 = K1 ? | wahr | kein Fehler |
| | | Speicher 16: (284b') | Speicher 16: K1 | Komparator 18: (284a) (284b') | | |
| | | 0 | | 0 = 0 ? | wahr | |
| K2 | 284a: K1 | Speicher 15: (284c') | Speicher 15: K3 | Komparator 17: (284c') (284b) | | |
| | 284b: K2 | | | | | |
| | 284c: K3 | K2 | | K2 = K2 ? | wahr | kein Fehler |
| | | Speicher 16: (284b') | Speicher 16: K2 | Komparator 18: (284a) (284b') | | |
| | | K1 | | K1 = K1 ? | wahr | |
| K3 | 284a: K2 | Speicher 15: (284c') | Speicher 15: K4 | Komparator 17: (284c')(284b) | | |
| | 284b: K3 | | | | | |
| | 284c: K4 | K3 | | K3 = K3 ? | wahr | kein Fehler |
| | | Speicher 16: (284b') | Speicher 16: K3 | Komparator 18: (284a)(284b') | | |
| | | K2 | | K2 = K2 ? | wahr | |

**Tabelle 2**

| **Programmzeiger bei Kontrollpunkt** | **Signaltripel 284** | **Speicherinhalt vor Einspeicherung** | **Speicherinhalt nach Einspeicherung** | **Werte, die im Komparator verglichen werden** | **Ergebnis** | **Fehlermit-teilung** |
|---|---|---|---|---|---|---|
| K1 | 284a: 0 | Speicher 15: (284c') | Speicher 15: K2 | Komparator 17: (284c') (284b) | | |
| | 284b: K1 | | | | | |
| | 284c: K2 | K1 | | K1 = K1 ? | wahr | kein Fehler |
| | | Speicher 16: (284b') | Speicher 16: K1 | Komparator 18: (284a) (284b') | | |
| | | 0 | | 0 = 0 ? | wahr | |
| K3 | 284a: K2 | Speicher 15: (284c') | Speicher 15: K4 | Komparator 17: (284c') (284b) | | |
| | 284b: K3 | | | | | |
| | 284c: K4 | K2 | | K2 = K3 ? | falsch | |
| | | Speicher 16: (284b') | Speicher 16: K3 | Komparator 18: (284a) (284b') | | Fehler |
| | | k1 | | K2 = K1 ? | falsch | |

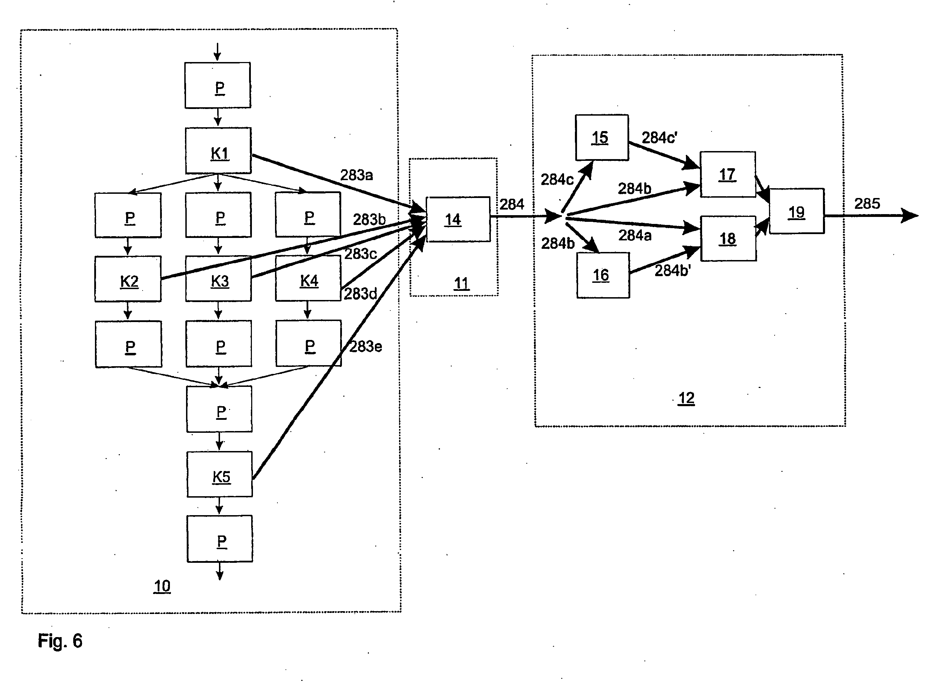

In den Figuren 6, 7 und 8 ist ein sich verzweigender Programmablauf dargestellt. Das bedeutet, dass beispielsweise auf den Kontrollpunkt K1 einer der Kontrollpunkte K2, K3 oder K4 als nächstfolgender Kontrollpunkt zulässig ist. Umgekehrt ist beispielsweise einer der Kontrollpunkte K2, K3 oder K4 als vorangegangener Kontrollpunkt des Kontrollpunkts K5 zulässig. In derartigen Fällen kann das Überwachungssignal - aktueller Sollwert nachfolgender Kontrollpunkt 284c bzw. aktueller Sollwert vorangegangener Kontrollpunkt 284a nicht eindeutig definiert sein.

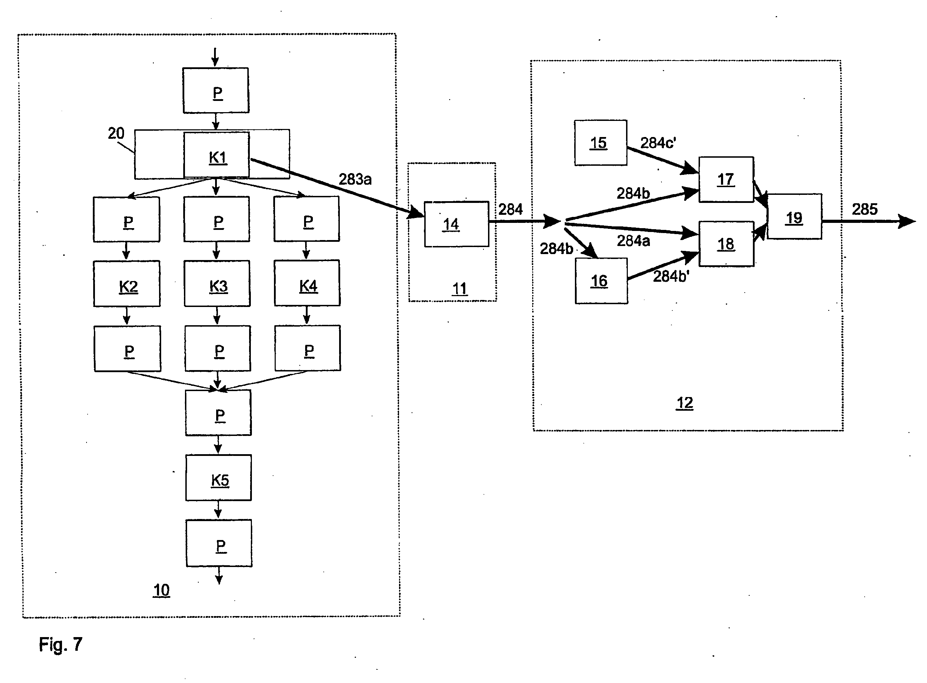

In einer ersten Ausführungsform wird dann dieser mehrdeutige Signalelement des Überwachungssignals 284 nicht mit dem Überwachungssignal 284 gesendet. Im jeweiligen ersten oder zweiten Speicher 15, 16 wird dann entsprechend kein Wert eingespeichert, so dass ein älterer eingespeicherter Wert darin stehen bleibt. In diesem Fall wird eine der beiden Vergleiche in einem der beiden Komparatoren mit "falsch" beantwortet. Diese Variante ist in den Figuren 7 und 8, 9 sowie in den Figuren 11 und 12 dargestellt.

In einer zweiten Ausführungsform erhält dann dieses mehrdeutige Signalelement des Überwachungssignals 284 einen Platzhalterwert, beispielsweise "0". Auch in diesem Fall wird einer der beiden Vergleiche in einem der beiden Komparatoren mit "falsch" beantwortet.

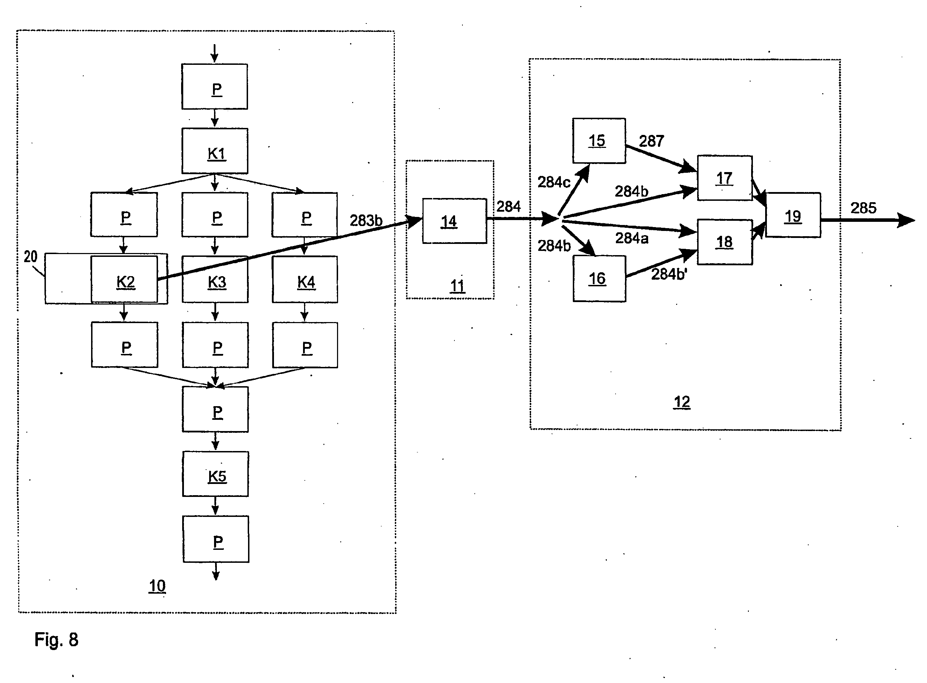

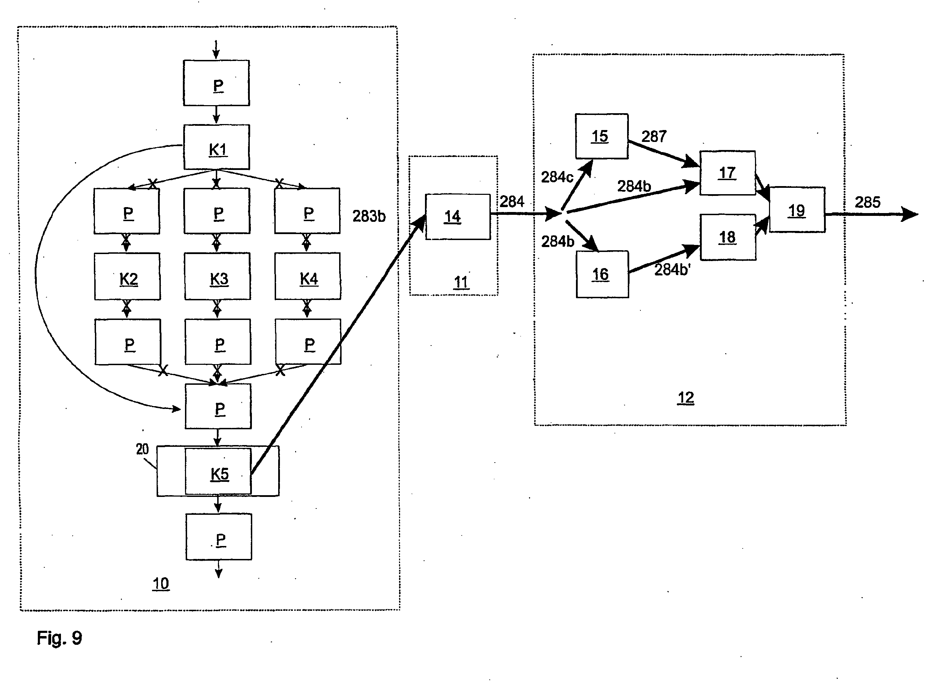

In den Figuren 8 und 9 ist als Beispiel das im Speicher 15 enthaltene Signal als "Null-Signal" 287 bezeichnet.

In der folgenden Tabelle 3 ist die Abfolge, wie sie in einem Programmablauf entsprechend den Figuren 7 und 8 entsteht, dargestellt.

**Tabelle 3**

| **Programmzeiger bei Kontrollpunkt** | **Signaltripel 284** | **Speicherinhalt vor Einspeicherung** | **Speicherinhalt nach Einspelcherung** | **Werte, die im Komparator verglichen werden** | **Ergebnis** | **Fehlermit-tellung** |
|---|---|---|---|---|---|---|
| K1 | 284a: 0 | Speicher 15: (284c') | Speicher 15: K1 | Komparator 17: (284c') (284b) | | |
| | 284b: K1 | | | | | |
| | 284c: 0 | K1 | | K1 = K1 ? | wahr | kein Fehler |
| | | Speicher 16: (284b') | Speicher 16: K1 | Komparator 18: (284a) (284b') | | |
| | | 0 | | 0 = 0 ? | wahr | |
| K2 | 284a: K1 | Speicher 15: (284c') | Speicher 15: K5 | Komparator 17: (284c') (284b) | | |
| | 284b: K2 | | | | | |
| | 284c: K5 | K1 | | K1 = K2 ? | falsch | kein Fehler |
| | | Speicher 16: (284b') | Speicher 16: K2 | Komparator 18: (284a) (284b') | | |
| | | K1 | | K1 = K1 ? | wahr | |

Entsprechend der Darstellung in der Figur 9 ist aufgrund eines Fehlers der Programmablauf direkt vom Kontrollpunkt K1 zum Kontrollpunkt K5 vorgerückt. Die Überwachungseinrichtung 12 detektiert entsprechend einen Fehler und gibt somit bei Erreichen des Kontrollpunktes K5 die Fehlermitteilung 285 mit dem Wert "Fehler" aus. In der Tabelle 4 ist das veranschaulicht.

**Tabelle 4**

| **Programmzeiger bei Kontrollpunkt** | **Signaltripel 284** | **Speicherinhalt vor Einspeicherung** | **Speicherinhalt nach Einspeicherung** | **Werte, die im Komparator verglichen werden** | **Ergebnis** | **Fehlermit-teilung** |
|---|---|---|---|---|---|---|
| K1 | 284a: 0 | Speicher 15: (284c') | Speicher 15: K1 | Komparator 17: (284c') (284b) | | |
| | 284b: K1 | | | | | |
| | 284c: 0 | K1 | | K1 = K1 ? | wahr | kein Fehler |
| | | Speicher 16: (284b') | Speicher 16: K1 | Komparator 18: (284a) (284b') | | |
| | | 0 | | 0 = 0 ? | wahr | |
| K5 | 284a: 0 | Speicher 15: (284c') | Speicher 15: K6 | Komparator 17: (284c') (284b) | | |
| | 284b: K5 | | | | | |
| | 284c: K6 | K1 | | K1 = K5 ? | falsch | |
| | | Speicher 16: (284b') | Speicher 16: K5 | Komparator 18: (284a) (284b') | | Fehler |
| | | K1 | | 0 = K1 ? | falsch | |

In der Tabelle 5 ist der gleiche Ablauf wie in der Tabelle 4 dargestellt, wenn vor dem Kontrollpunkt K1 noch ein Kontrollpunkt K0 durchlaufen wurde.

**Tabelle 5**

| **Programmzeiger bei Kontrollpunkt** | **Signaltripel 284** | **Speicherinhalt vor Einspeicherung** | **Speicherinhalt nach Einspeicherung** | **Werte, die im Komparator verglichen werden** | **Ergebnis** | **Fehlermitteilung** |
|---|---|---|---|---|---|---|
| K0 | 284a: 0 | Speicher 15: (284c') | Speicher 15: K0 | Komparator 17: (284c') (284b) | | |
| | 284b: K0 | | | | | |
| | 284c: K1 | K0 | | K0 = K0 ? | wahr | kein Fehler |
| | | Speicher 16: (284b') | Speicher 16: K0 | Komparator 18: (284a) (284b') | | |
| | | 0 | | 0 = 0 ? | wahr | |
| K1 | 284a: K0 | Speicher 15: (284c') | Speicher 15: K0 | Komparator 17: (284c') (284b) | | |
| | 284b: K1 | | | | | |
| | 284c: 0 | K0 | | K0 = K1 ? | falsch | kein Fehler |
| | | Speicher 16: (284b') | Speicher 16: K1 | Komparator 18: (284a) (284b') | | |
| | | K0 | | K0 = K0 ? | wahr | |
| K5 | 284a: 0 | Speicher 15: (284c') | Speicher 15: K6 | Komparator 17: (284c') (284b) | | |
| | 284b: K5 | | | | | |
| | 284c: K6 | K0 | | K0 = K5 ? | falsch | |
| | | Speicher 16: (284b') | Speicher 16: K5 | Komparator 18: (284a) (284b') | | Fehler |
| | | K1 | | 0 = K1 ? | falsch | |

Es wird ausdrücklich darauf hingewiesen, dass die Lösung auch vollständig im Programmcode, als "vollständige Softwarelösung", selbst implementiert sein kann und nur das Fehlersignal 285 selbst durch eine entsprechende Ausgabeeinheit, wie sie beispielsweise als Einsteckkarten für Computer verfügbar sind, ausgegeben wird.
Die Vergleichsoperationen, die Speicheroperationen und die Oder-Operation in der Überwachungseinrichtung 12 können in diesem Fall vollständig innerhalb der Software abgebildet sein. Nur die Ausgabe des Ergebnisses der Oder-Operation als elektrischer Wert würde durch eine Hardware realisiert sein. Diese Ausführungsform wird dann angewendet, wenn die Sicherheit der Steuerung nicht ganz so extrem hohen Anforderungen genügen muss.

Je nach geforderter Überwachungssicherheit können Zwischenstufen zwischen der vollständigen "Softwarelösung" und der in den Beispielen gezeigten Lösung ausgeführt werden.

## Patentansprüche

1. Verfahren zur Überwachung eines Steuerungsprogrammes eines Steuerungssystems eines Fahrzeugs mit einer Steuereinrichtung (10) mit einem Prozessor und einem Steuerprogramm, welches aus mindestens einem in die Steuereinrichtung (10) eingespeisten Messwertsignal (281) mindestens ein Stellwertsignal (282) berechnet und an einen Stellaktuator (100, 127) ausgibt, wobei an mindestens zwei vordefinierten Ablaufpunkten im Steuerprogramm ein Kontrollpunkt (K) definiert ist, an dem die Steuereinrichtung (10) einen Programmausgabewert (283, 284) ausgibt, welcher ein Überwachungssignal (284) bildet und an eine Überwachungseinrichtung (12) ausgibt, wobei der Kontrollpunkt (K) die Ausgabe eines Überwachungssignal (284) veranlasst, das mindestens zwei Signalelemente (284a, b , c) von drei möglichen Signalelementen enthält, wobei ein erstes Signalelement (284a) den Kontrollpunkt (K1), den das Steuerprogramm unmittelbar vor dem derzeitigen Kontrollpunkt (K2) durchlaufen haben soll repräsentiert und ein zweites Signalelement (284b), das den derzeitigen Kontrollpunkt repräsentiert und ein drittes Signalelement (284c), das den nächsten im Programmablauf vorgesehenen Kontrollpunkt (K3) repräsentiert, wobei die Überwachungseinrichtung (12) die Überwachungssignale (284) auf korrekten Zustand prüft, **dadurch gekennzeichnet, dass** das dritte Signalelement (284c) in einem ersten Speicher (15) abgelegt wird und das von diesem Speicher (15) ausgelesene Signal (284c') in einem ersten Komparator (17) mit dem aktuellen Istwertsignal (284b) des Kontrollpunktes (K2) verglichen wird und gleichzeitig das zweite Signalelement (284b) in einem zweiten Speicher (16) abgelegt wird und das von diesem Speicher (16) ausgelesene Signal (284b') in einem zweiten Komparator (18) mit dem ersten Signalelement (284a) des Kontrollpunktes (K1) verglichen wird und dass die beiden Ausgangssignale der Komparatoren (17, 18) mit einem oder - Glied verknüpft werden welches ein Zustandssignal erzeugt und im Fall einer Fehlfunktion des Programmablaufes ein Fehlersignal (285) abgibt.

2. Verfahren nach Anspruch 1, **dadurch gekennzeichnet, dass** das Fehlersignal (285) dann auf den vorbestimmten Pegel oder Wert für den Zustand "Fehler" gesetzt wird, wenn beide Vergleichsoperationen zum Ergebnis "falsch" gelangen, während das Fehlersignal auf den vorbestimmten Pegel für den Zustand "kein Fehler" gesetzt wird, wenn eine der beiden Vergleichsoperationen zum Erlebnis "wahr" gelangt.

3. Verfahren nach Anspruch 1 oder 2, **dadurch gekennzeichnet, dass** die Überwachungseinrichtung (12) und die Steuereinrichtung (10) über eine Verarbeitungseinrichtung (11) verbunden ist mit welcher eine Aufbereitung der Codes bzw. der Signale erfolgt.

4. Verfahren nach einem der vorhergehenden Ansprüche 1 bis 3, **dadurch gekennzeichnet, dass** die Signale in der Überwachungseinrichtung (12) und oder der Verarbeitungseinrichtung (11) mindestens teilweise, vorzugsweise insgesamt, in einer elektronische Schaltung verarbeitet werden.

5. Verfahren nach einem der vorhergehenden Ansprüche 1 bis 4, **dadurch gekennzeichnet, dass** das Fehlersignal (285) einer weiteren Steuerung (13) zugeführt wird welche als Notfallsteuerung Notmassnahmen bewirkt, an Aggregaten von Maschinen oder vorzugsweise an Aggregaten von Kraftfahrzeugen, wie Lenkungssystemen.

6. Verfahren nach einem der vorhergehenden Ansprüche 1 bis 5, **dadurch gekennzeichnet, dass** die Zeit zwischen zwei aufeinanderfolgenden Überwachungssignalen (284), die von der Steuereinrichtung (10) ausgelöst, an die Verarbeitungseinrichtung (11) und an die Oberwachungseinrichtung (12) gesendet wurden, überwacht wird und als Fehlersignal (285), bei Überschreiten einer vorgebbaren Zeitspanne, ein dem Wert "Fehler" zugeordnetes Signal ausgibt.

7. Verfahren nach einem der vorhergehenden Ansprüche 1 bis 6, **dadurch gekennzeichnet, dass** das Steuerungssystem als Maschinensteuerung verwendet wird oder als Steuer rung für Aggregate in einem Kraftfahrzeug, vorzugsweise zur sicheren Steuerung einer Lenkungsanordnung.

## Claims

1. A method for monitoring a control program of a control system of a vehicle with a control device (10) with a processor and with a control program, that calculates at least one position value signal (282) from at least one measured value signal (281) fed into the control device (10) and outputs it to a position actuator (100, 127), whereby a control point (K) is defined at at least two predefined sequence points in the control program, at which control point the control device (10) outputs a program output value (283, 284) that forms a monitoring signal (284) and outputs it to a monitoring device (12), whereby the control point (K) brings about the outputting of a monitoring signal (284) that contains at least two signal elements (284a, b, c) from three possible signal elements, whereby a first signal element (284a) represents the control point (K1) which should have passed through the control program immediately before the current control point (K2), and a second signal element (284b) that represents the current control point, and a third signal element (284c) that represents the next control point (K3) provided in the program sequence, whereby the monitoring device (12) checks the monitoring signals (284) for the correct state, **characterized in that** the third signal element (284c) is filed in a first memory (15) and the signal (284c') read out from this memory (15) is compared in a first comparator (17) with the current actual value signal (284b) of the control point (K2) and at the same time the second signal element (284b) is filed in a second memory (16) and the signal (284b') read out from this memory (16) is compared in a second comparator (18) with the first signal element (284a) of the control point (K1), and that the two output signals of the comparator (17, 18) are linked with one or element that generates a status signal and emits an error signal (285) in the case of an error function of the program sequence.

2. The method according to claim 1, **characterized in that** the error signal (285) is then set to the predetermined level or value for the "error" state if both comparison operations arrive at the result "false" whereas the error signal is set to the predetermined level for the state "no error" if one of the two comparison operations arrives at the result "true".

3. The method according to claim 1 or 2, **characterized in that** the monitoring device (12) and the control device (10) are connected via a processing device (11) with which a preparation of the codes or signals takes place.

4. The method according to one of the previous claims 1 to 3, **characterized in that** the signals in the monitoring device (12) and/or in the processing device (11) are processed at least partially, preferably entirely in an electronic circuit.

5. The method according to one of the previous claims 1 to 4, **characterized in that** the error signal (285) is supplied to another control (13) that brings about emergency measures as an emergency control in units of machines or preferably in units of motor vehicles, such as steering systems.

6. The method according to one of the previous claims 1 to 5, **characterized in that** the time between two successive monitoring signals (284), initiated by the control device (10), that were transmitted to the processing device (11) and to the monitoring device (12), is monitored and emits a signal associated with the value "error" as an error signal (285) upon exceeding a settable time span.

7. The method according to one of the previous claims 1 to 6, **characterized in that** the control system is used as a machine control or as a control for units in a motor vehicle, preferably for a reliable control of a steering arrangement.

## Revendications

1. Procédé pour surveiller un programme de commande d'un système de commande d'un véhicule avec un dispositif de commande (10) avec un processeur et un programme de commande qui, à partir d'au moins un signal de valeur de mesure (281) introduit dans le dispositif de commande (10), calcule au moins un signal de valeur de réglage (282) et le transmet à un actionneur de réglage (100, 127), étant précisé qu'au niveau de deux points de déroulement prédéfinis, dans le programme de commande, est défini un point de contrôle (K) au niveau duquel le dispositif de commande (10) émet une valeur de sortie de programme (283, 284) qui forme un signal de surveillance (284) et le transmet à un dispositif de surveillance (12), étant précisé que le point de contrôle (K) provoque l'émission d'un signal de surveillance (284) qui contient au moins deux éléments de signal (284a, b, c), sur trois éléments de signal possibles, étant précisé qu'un premier élément de signal (284a) représente le point de contrôle (K1) que le programme de commande doit avoir franchi juste avant le point de contrôle actuel (K2), qu'un deuxième élément de signal (284b) représente le point de contrôle actuel, et qu'un troisième élément de signal (284c) représente le point de contrôle suivant (K3) prévu dans le déroulement du programme, étant précisé que le dispositif de surveillance (12) vérifie l'état correct des signaux de surveillance (284),
**caractérisé en ce que** le troisième élément de signal (284c) est stocké dans une première mémoire (15) et que le signal (284c') extrait de cette mémoire (15) est comparé dans un premier comparateur (17) au signal de valeur réelle du moment (284b) du point de contrôle (K2) et qu'en même temps le deuxième élément de signal (284b) est stocké dans une deuxième mémoire (16) et que le signal (284b') extrait de cette mémoire (16) est comparé dans un deuxième comparateur (18) au premier élément de signal (284a) du point de contrôle (K1), et **en ce que** les deux signaux de sortie des comparateurs (17, 18) sont combinés à l'aide d'un élément OU qui génère un signal d'état et, en cas de dysfonctionnement du déroulement du programme, émet un signal d'erreur (285).

2. Procédé selon la revendication 1, **caractérisé en ce que** le signal d'erreur (285) est mis au niveau ou à la valeur prédéfinis pour l'état "erreur" lorsque les deux opérations de comparaison arrivent au résultat "faux", tandis que le signal d'erreur est mis au niveau prédéfini pour l'état "pas d'erreur" lorsque l'une des deux opérations de comparaison arrivent au résultat "vrai".

3. Procédé selon la revendication 1 ou 2, **caractérisé en ce que** le dispositif de surveillance (12) et le dispositif de commande (10) sont reliés par un dispositif de traitement (11) avec lequel a lieu un traitement des codes ou des signaux.

4. Procédé selon l'une des revendications 1 à 3 précédentes, **caractérisé en ce que** les signaux dans le dispositif de surveillance (12) et ou le dispositif de traitement (11) sont traités au moins en partie, de préférence en totalité, dans un circuit électronique.

5. Procédé selon l'une des revendications 1 à 4 précédentes, **caractérisé en ce que** le signal d'erreur (285) est transmis à une autre commande (13) qui provoque comme commande d'urgence des mesures d'urgence, sur des groupes de machines ou de préférence sur des groupes de véhicules automobiles tels que des systèmes de direction.

6. Procédé selon l'une des revendications 1 à 5 précédentes, **caractérisé en ce que** la durée entre deux signaux de surveillance (284) successifs qui, sous l'action du dispositif de commande (10), ont été envoyés au dispositif de traitement (11) et au dispositif de surveillance (12), est surveillée et donne sous la forme d'un signal d'erreur (285), en cas de dépassement d'un laps de temps apte à être prédéfini, un signal associé à la valeur "erreur".

7. Procédé selon l'une des revendications 1 à 6 précédentes, **caractérisé en ce que** le système de commande est utilisé comme commande de machine ou comme commande pour des groupes dans un véhicule automobile, de préférence pour une commande fiable d'un dispositif de direction.
